# FASCICULE DE BREVET EUROPEEN

(11) **EP 1 844 624 B1**
(45) Date de publication et mention de la délivrance du brevet: **14.07.2010**
(21) Numéro de dépôt: 06709093.6
(22) Date de dépôt: 11.01.2006
(51) Int. Cl.: H04W 4/10

(54) **Procédé d'interruption du locuteur du moment d'un appel de groupe par un des auditeurs dudit appel de groupe**
Verfahren, durch das einer der an einer Gruppenverbindung teilnehmenden Zuhörer einen Sprecher unterbrechen kann
Method by which one of the listeners participating in a group call can interrupt a speaker

(30) Priorité: 12.01.2005 FR 0500328
(43) Date de publication de la demande: 17.10.2007
(73) Titulaire: SAGEM COMMUNICATIONS SAS, 92848 Rueil Malmaison Cedex (FR)
(72) Inventeur: DORION, Marc, F-69009 Lyon (FR)
(74) Mandataire: Maillet, Alain
(86) Numéro de dépôt international: PCT/FR2006/000086
(87) Numéro de publication internationale: WO 2006/075104

(56) Documents cités:
- WO-A-00/40045
- WO-A-01/67674
- WO-A-94/17642
- ETSI: "Digital cellular telecommunications system (Phase 2+); Mobile radio interface layer 3 specification (3GPP TS 04.08 version 6.21.1 Release 1997)" ETSI TS 100 940 V6.21.1 (2003-09), 30 septembre 2003 (2003-09-30), page 1-9,302-305, XP002347107 France cité dans la demande
- ETSI: "Digital cellular telecommunications system (Phase 2+); Voice Group Call Service (VGCS); Stage 2 (3GPP TS 43.068 version 4.4.0 Release 4)" ETSI TS 143 068 V4.4.0 (2004-09), 30 septembre 2004 (2004-09-30), pages 1-70, XP002347185 France
- ETSI: "Digital cellular telecommunications system (Phase 2+); Universal Mobile Telecommunications System (UMTS); Enhanced Multi-Level Precedence and Preemption Service (EMLPP); Stage 2 (3GPP TS 23.067 version 5.0.0 Release 5)" ETSI TS 123 067 V5.0.0 (2002-06), 30 juin 2002 (2002-06-30), pages 1-26, XP002347186 France

## Description

La présente invention concerne un procédé d'interruption du locuteur du moment d'un appel de groupe par un des auditeurs dudit appel de groupe, ledit appel de groupe étant établi dans un réseau de téléphonie mobile, par exemple du type GSM (Global System for Mobile communications) supportant des appels de groupe.

Dans le système de téléphonie mobile GSM normalisé à l'ETSI (European Telecommunications Standards Institute : Institut européen des standards de télécommunications), est prévu un service vocal d'appel de groupe VGCS (Voice Group Call Service) avec lequel il est possible d'établir sur la liaison radio une conversation avec un groupe prédéfini d'abonnés dans un mode half duplex. Un description de ce service est donnée dans les recommandations de l'ETSI référencées respectivement GSM 02.68, GSM 03.68 et GSM 04.68. Certains alinéas de la recommandation GSM 04.08 sont également relatifs à ce service.

Plus précisément, ce service VGCS permet à des abonnés qui appartiennent à un même groupe prédéfini de communiquer entre eux, après établissement d'une communication de groupe (encore appelée appel de groupe : group call), selon le principe d'un seul locuteur (talker), qui est le seul à un moment donné au cours de cet appel de groupe à avoir la parole (il est dit dans un mode de transmission de groupe : group transmit mode), à destination de plusieurs auditeurs (listener) qui ne peuvent par conséquent qu'écouter (ils sont dits dans un mode de réception de groupe : group receive mode). La station mobile du locuteur utilise pour ce faire la voie montante (uplink) d'un canal de données, du type TCH (Trafic Channel) et appelé par la suite canal de groupe GCH (Group Channel), mais également la voie descendante (downlink) du même canal GCH alors que la station mobile de chaque auditeur n'utilise que la voie descendante. Lorsqu'aucun locuteur n'est présent dans un groupe, le réseau avertit l'ensemble des abonnés du groupe que la voie montante du canal de groupe est libre pour accès et, ce, par l'envoi de messages spécifiques dits UPLINK FREE. A l'inverse, lorsqu'un locuteur est présent dans un groupe pendant un appel de groupe, le réseau avertit les stations mobiles des auditeurs du même groupe que la voie montant du canal de groupe GCH est occupée et, ce, par l'envoi de messages appelés UPLINK BUSY. Si un abonné souhaite être locuteur dans un groupe pour un appel de groupe déjà établi, il fait une requête d'accès à la voie montant du canal de groupe GCH par l'envoi d'un message spécifique UPLINK ACCESS et une procédure d'accès au canal montant (Uplink access procedure) est mise en oeuvre. Essentiellement, celle-ci consiste à permettre à cet abonné de devenir locuteur et d'ainsi s'approprier la voie montante du canal de groupe GCH lorsque cette voie montante est libre d'accès et inversement, à rejeter la requête d'accès de tout abonné lorsque la voie montante n'est pas libre d'accès. Pour plus de détails sur cette procédure, on pourra se reporter utilement à la recommandation GSM 04.08 et notamment aux chapitres 3.1.2.3, 3.1.2.4, 3.3.1.2, 3.4.15, etc. On notera qu'à tout moment un locuteur peut revenir dans le mode de réception de groupe et ainsi libérer l'accès au canal montant.

Le problème que pose cette architecture est que, dans l'état actuel, il n'est pas possible pour une station mobile d'un auditeur d'interrompre un locuteur en cours d'appel de groupe tant que celui-ci n'a pas rendu libre l'accès à la voie montante du canal de groupe, car la station mobile du locuteur a pendant cet appel de groupe, en quelque sorte le monopole de la voie montante du canal de groupe GCH ou d'un canal dédié. Le seul moyen auj ourd'hui pour un auditeur de devenir le locuteur d'un appel de groupe est d'attendre que le locuteur du moment ait rendu libre l'accès à la voie montante du canal de groupe puis de faire une demande d'accès à cette voie montante pour devenir ainsi locuteur.

Le document WO 94/17642 décrit un procédé d'interruption du locuteur du moment d'un appel de groupe par un des auditeurs dudit appel de groupe, ledit appel de groupe étant établi dans un réseau de téléphonie mobile supportant des appels de groupe et qui comporte une étape de d'accès de la station mobile de l'auditeur requérant à un canal de signalisation commun, normalement prévu pour qu'une station mobile puisse accéder au réseau pour initier une communication, afin de transmettre audit réseau une requête d'interruption; une étape de traitement par le réseau de ladite requête pour décider d'interrompre ou pas ledit locuteur; et une étape d'interruption du locuteur lorsque ledit réseau a décidé ladite interruption.

Il y a donc, dans le système qui a été présenté ci-dessus, un besoin pour la mise en place de moyens permettant à un auditeur d'interrompre un locuteur pour le ramener à l'état d'auditeur et pour devenir lui-même un locuteur.

La présente invention concerne donc un procédé d'interruption du locuteur du moment d'un appel de groupe par un des auditeurs dudit appel de groupe, ledit appel de groupe étant établi dans un réseau de téléphonie mobile supportant des appels de groupe.

La présente invention est définie par l'object de la revendication indépendente 1.

Avantageusement, la requête contient un identificateur de l'appel de groupe auquel appartient ledit auditeur requérant. Elle peut également contenir un identificateur de l'abonné requérant.

Avantageusement, ledit procédé comporte une étape de traitement des niveaux de priorité relatifs du locuteur et de l'auditeur désirant interrompre le locuteur. Cette étape de traitement des niveaux de priorité relatifs peut comprendre :
- une sous-étape de transmission à chacun desdits auditeurs de l'appel de groupe du niveau de priorité du locuteur du moment,
- une sous-étape de comparaison dudit niveau de priorité du locuteur transmis au niveau de priorité de l'auditeur désirant interrompre le locuteur, ladite étape étant mise en oeuvre par la station mobile dudit auditeur,
ladite requête d'interruption du locuteur du moment étant émise si la sous-étape de comparaison révèle que le niveau de priorité dudit auditeur est au moins supérieur à celui du locuteur.

Alternativement, ladite étape de traitement des niveaux de priorité relatifs comprend une sous-étape de comparaison dudit niveau de priorité du locuteur au niveau de priorité de l'auditeur requérant, ladite étape étant mise en oeuvre par ledit réseau, ladite requête étant rejetée si la sous-étape de comparaison révèle que le niveau de priorité dudit auditeur est au moins supérieur à celui du locuteur.

Avantageusement, le niveau de priorité de l'auditeur requérant est transmis en même temps que ou dans ladite requête d'interruption.

Alternativement, le niveau de priorité de chacun des abonnés d'un appel de groupe est connu du réseau.

Avantageusement, ledit procédé comprend une étape de transmission à la station mobile dudit auditeur requérant d'un message quant à la décision prise par le réseau. Ladite requête peut alors comprendre un nombre aléatoire qui est retranscrit dans ledit message quant à la décision prise par le réseau.

Les caractéristiques de l'invention mentionnées ci-dessus, ainsi que d'autres, apparaîtront plus clairement à la lecture de la description suivante d'un exemple de réalisation, ladite description étant faite en relation avec le dessin joint, dans lequel :
La Fig. 1 est un schéma d'un système de téléphonie mobile mettant en oeuvre un appel de groupe et, ce, dans un mode de fonctionnement dit mode 1.5 canal,
La Fig. 2 est un schéma d'un système de téléphonie mobile mettant en oeuvre un appel de groupe et, ce, dans un mode de fonctionnement dit mode 1 canal, et
La Fig. 3 est un schéma qui illustre l'échange de messages entre une station mobile requérante et le réseau, et, ce, dans un mode de réalisation particulier.

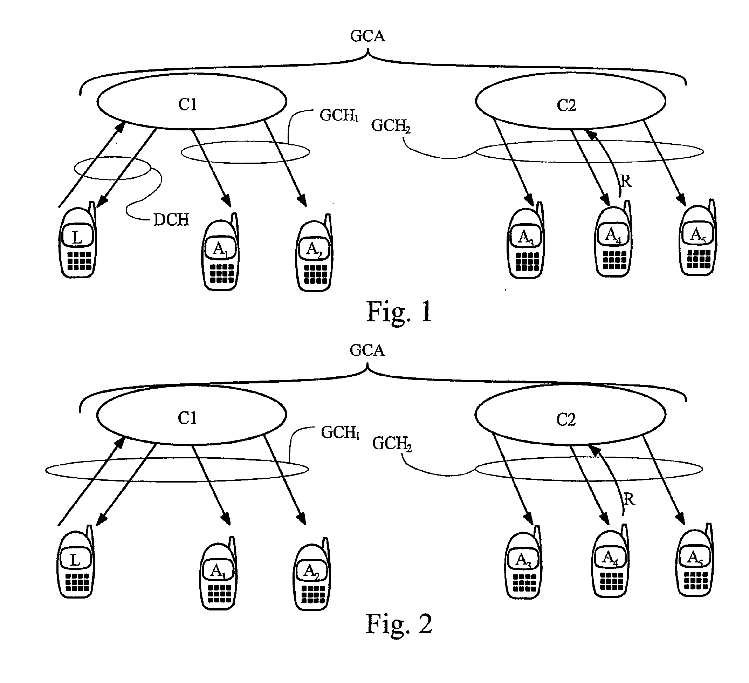

Dans un système de téléphonie mobile du type GSM permettant la mise en oeuvre des appels de groupe, il existe deux modes de fonctionnement dépendant de l'allocation à la station mobile du locuteur soit d'un canal dédié DCH, soit d'un canal du type canal de trafic TCH, que l'on nomme, compte tenu du contexte, canal de groupe GCH. Le premier mode de fonctionnement, généralement appelé "mode 1.5 canal", est décrit en relation avec la Fig. 1. Quant au second mode, généralement appelé "mode 1 canal", il est décrit en relation avec la Fig. 2.

Dans ces Figs. 1 et 2, on a représenté deux cellules C1 et C2 d'une même aire d'un appel de groupe GCA (Group Call Area) et, ce, à un moment donné au cours d'un appel de groupe où la cellule C1 couvre la station mobile d'un locuteur L ainsi que les stations mobiles de certains des auditeurs A₁ et A₂ et où la cellule C2 couvre d'autres stations mobiles d'auditeurs A₃ à A₅. On notera que d'autres cellules peuvent également être mises en oeuvre. Elles sont fonctionnellement équivalentes à la cellule C2.

Dans le premier mode de fonctionnement (Fig. 1), est alloué à la station mobile du locuteur L un canal dédié DCH composé d'une voie montante (flèche en direction de la cellule C1) et d'une voie descendante (flèche en direction de la station du locuteur L) alors qu'à toutes les stations mobiles des auditeurs A₁ à Aₙ (ici n = 5) est alloué un canal de groupe GCH (unique canal logique) qui, au niveau physique, se divise en un canal de groupe GCH₁ pour la cellule C1 et en un canal de groupe GCH₂ pour la cellule C2, eux-mêmes composés chacun d'une voie descendante (flèches en direction des stations des auditeurs) et d'une voie montante, mais cette dernière n'est pas utilisée (d'où l'absence de flèches sur la Fig. 1). On précisera que les canaux GCH₁ et GCH₂ sont des canaux physiques.

Dans le second mode de fonctionnement (Fig. 2), il n'y a pas de canal dédié à la station mobile du locuteur L comme précédemment. Par contre, un seul canal logique de groupe GCH (là aussi un canal de groupe GCH₁ et un canal de groupe GCH₂ pour respectivement les cellules C1 et C2) est alloué à l'ensemble des stations mobiles des abonnés du groupe en communication, qu'ils soient locuteurs ou auditeurs. La voie montante du canal de groupe GCH est allouée à la seule station mobile du locuteur L alors que la voie descendante est allouée à toutes les stations mobiles des abonnés du groupe. La station mobile du locuteur peut éventuellement désactiver sa propre réception de la voie descendante du canal de groupe GCH pour éviter des phénomènes d'échos.

Comme mentionné dans le préambule de la présente description, les voies montantes des canaux GCH₁ et GCH₂ ne peuvent pas être utilisées par les stations mobiles des auditeurs A₁ à A₅.

Selon la présente invention, une station mobile d'un auditeur qui souhaite interrompre le locuteur émet une requête d'interruption R de locuteur sur un canal d'accès commun tel que le canal RACH, normalement prévu pour qu'une station mobile puisse accéder au réseau pour initialiser une communication.

Cette requête R est spécifique à une demande d'interruption d'un locuteur d'un appel de groupe. Elle contient un identificateur ID de l'appel de groupe concerné. L'identificateur ID dont il s'agit ici est par exemple celui qui est décrit dans le chapitre 9 du document 3GPP TS 03.68. Elle peut également être accompagnée d'un nombre aléatoire qui servira pour la reconnaissance de la réponse à la requête faite par le réseau. Elle est accompagnée d'un identificateur de l'abonné requérant, comme par exemple l'identificateur IMSI (International Mobile Subscriber Identity) ou l'identificateur TMSI (Temporary Mobile Subscriber Identity) décrits dans le chapitre 2 du document 3GPP TS 03.03.

Le réseau reçoit la requête R émanant de la station mobile requérante (en l'occurrence la station mobile A₄), la traite pour décider d'interrompre ou pas le locuteur, et renvoie, sur la voie descendante du canal de groupe GCH, une réponse REP quant à cette décision. Dans cette réponse REP, est recopié, le cas échéant, le nombre aléatoire de la requête ce qui permet à la station mobile requérante de s'assurer que cette réponse lui est bien destinée.

En cas de décision d'interrompre, le réseau provoque l'interruption, si bien que le locuteur devient un auditeur, et le canal dédié DCH ou la voie montante du canal du groupe GCH, selon le cas, est maintenant affecté à la station mobile requérante, en l'occurrence la station mobile A₄, qui devient station mobile de locuteur. La station mobile du requérant A₄ passe en mode de transmission de groupe, par exemple, à la réception de la réponse du réseau. Le réseau transmet également une commande d'interruption à la station mobile du locuteur qui passe alors en mode de réception de groupe.

Le traitement effectué par le réseau consiste à déterminer l'identité de l'auditeur requérant sur la base de son identificateur d'abonné (par exemple IMSI ou TMSI) contenu dans la requête R, à déterminer l'appel de groupe concerné par la requête de cet auditeur et, ce, sur la base de l'identificateur de groupe ID contenu dans la requête, et à déduire de cet appel de groupe l'identité du locuteur du moment. C'est sur la base de l'identité de l'auditeur requérant et de l'identité du locuteur que la décision est prise d'interrompre ou pas le locuteur.

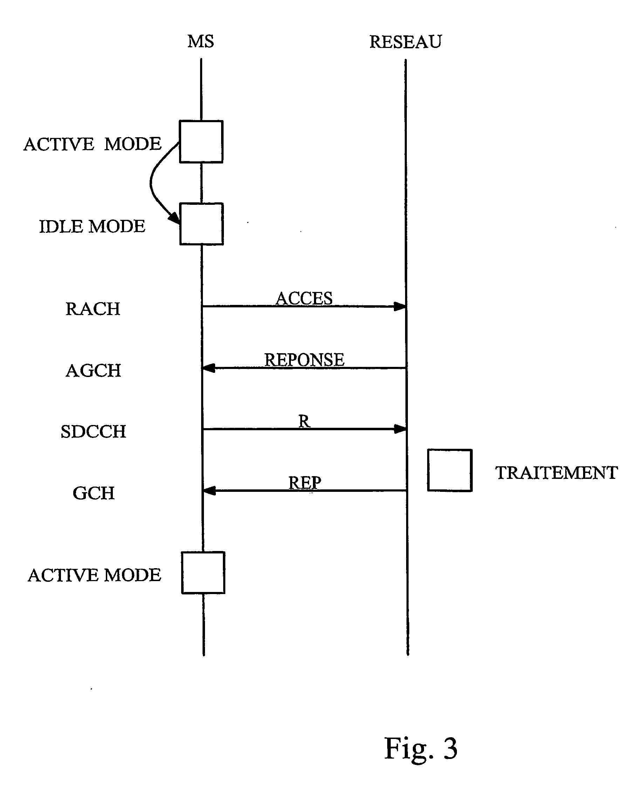

Une variante de réalisation est décrite en relation avec la Fig. 3. Une station mobile d'un auditeur souhaitant interrompre le locuteur du moment d'un appel de groupe quitte son mode de fonctionnement actif (active mode) et passe dans le mode de fonctionnement en veille, mode dit "idle". Alors, elle effectue, comme précédemment, un accès au canal d'accès commun tel que le canal RACH. Le réseau acquitte la réception de cet accès sur le canal prévu à cet effet, soit le canal AGCH, lequel pointe un canal de signalisation dédié SDCCH sur lequel la station mobile s'identifie et transmet alors la requête d'interruption R. La réponse REP du réseau à cette requête est effectuée sur la voie descendante du canal de groupe GCH comme précédemment. La station mobile requérante repasse dans son mode de fonctionnement actif.

L'intérêt de cette variante est de pouvoir effectuer la requête R sur un canal de signalisation dédié et, pour ce faire, d'utiliser le protocole connu d'accès au réseau.

Le système de la présente invention peut prévoir le traitement d'une priorité d'être locuteur. Selon un premier mode de réalisation, ce traitement d'une priorité est réalisé au niveau des stations mobiles. Au moment où une station mobile devient la station du locuteur d'un groupe, elle informe le réseau de son identité mais également de son niveau de priorité, par exemple au moyen d'un message spécifique, tel que le message dit "TALKER INDICATION" tel que défini dans le document ETSI TS 100 940 au chapitre 9.1.44. Le réseau informe alors, par un message que l'on pourra appeler "TALKER INFORMATION" transmis sur la voie descendante du canal de groupe GCH, chaque station mobile du groupe du niveau de priorité de la station mobile du locuteur du groupe.

Au moment où l'auditeur effectue une requête d'interruption du locuteur, sa propre station mobile, avant la transmission de la requête, compare le niveau de priorité du locuteur actuel au sien. S'il est inférieur ou égal au sien, la requête est transmise au réseau comme précédemment décrit. Par contre, s'il est supérieur, la requête n'est pas transmise et l'auditeur requérant est averti que sa requête est directement rejetée.

Selon un autre mode de réalisation, ce traitement d'une priorité est réalisé au niveau du réseau. Lorsque la requête de l'auditeur est reçue par le réseau, celui-ci compare le niveau de priorité du locuteur actuel au niveau de priorité de l'auditeur requérant. Le réseau a connaissance de ce niveau, soit parce qu'il est inscrit dans la requête elle-même, soit parce qu'il est connu du réseau (il est par exemple contenu dans une base de données répertoriant pour chaque auditeur son niveau de priorité). Si le niveau de priorité du locuteur est inférieur ou égal au niveau de priorité de l'auditeur requérant, la requête est acceptée et elle est rejetée dans le cas contraire.

## Revendications

1. Procédé d'interruption du locuteur du moment d'un appel de groupe par un des auditeurs dudit appel de groupe, ledit appel de groupe étant établi dans un réseau de téléphonie mobile supportant des appels de groupe, **caractérisé en ce qu'**il comporte les étapes suivantes :
a)
- une sous-étape où la station mobile de l'auditeur requérant quitte son mode de fonctionnement actif et passe en mode de fonctionnement en veille,
- une sous-étape d'accès à un canal d'accès commun, tel que le canal d'accès au réseau RACH, pour demander l'accès au réseau,
- une sous-étape d'allocation d'un canal de signalisation,
- une sous-étape de transmission sur ledit canal de signalisation de ladite requête d'interruption,
b) une étape de traitement par le réseau de ladite requête pour décider d'interrompre ou pas ledit locuteur, et
c) une étape d'interruption du locuteur lorsque ledit réseau a décidé ladite interruption.

2. Procédé d'interruption selon la revendication 1, **caractérisé en ce que** ladite requête contient un identificateur de l'appel de groupe auquel appartient ledit auditeur requérant.

3. Procédé d'interruption selon une des revendications précédentes, **caractérisé en ce que** ladite requête contient un identificateur de l'abonné requérant.

4. Procédé d'interruption selon une des revendications précédentes, **caractérisé en ce qu'**il comporte une étape de traitement des niveaux de priorité relatifs du locuteur et de l'auditeur désirant interrompre le locuteur.

5. Procédé d'interruption selon la revendication 4, **caractérisé en ce que** ladite étape de traitement des niveaux de priorité relatifs comprend :
- une sous-étape de transmission à chacun desdits auditeurs de l'appel de groupe du niveau de priorité du locuteur du moment,
- une sous-étape de comparaison dudit niveau de priorité du locuteur transmis au niveau de priorité de l'auditeur désirant interrompre le locuteur, ladite étape étant mise en oeuvre par la station mobile dudit auditeur,
ladite requête d'interruption du locuteur du moment étant émise si la sous-étape de comparaison révèle que le niveau de priorité dudit auditeur est au moins supérieur à celui du locuteur.

6. Procédé d'interruption selon la revendication 4, **caractérisé en ce que** ladite étape de traitement des niveaux de priorité relatifs comprend une sous-étape de comparaison dudit niveau de priorité du locuteur au niveau de priorité de l'auditeur requérant, ladite étape étant mise en oeuvre par ledit réseau,
ladite requête étant rejetée si la sous-étape de comparaison révèle que le niveau de priorité dudit auditeur est au moins supérieur à celui du locuteur.

7. Procédé d'interruption selon la revendication 6, **caractérisé en ce que** le niveau de priorité de l'auditeur requérant est transmis, en même temps que ou dans ladite requête d'interruption.

8. Procédé d'interruption selon la revendication 6, **caractérisé en ce que** le niveau de priorité de chacun des abonnés d'un appel de groupe est connu du réseau.

9. Procédé d'interruption selon une des revendications précédentes, **caractérisé en ce qu'**il comprend une étape de transmission à la station mobile dudit auditeur requérant d'un message quant à la décision prise par le réseau.

10. Procédé d'interruption selon la revendication 9, **caractérisé en ce que** ladite requête comprend un nombre aléatoire qui est retranscrit dans ledit message quant à la décision prise par le réseau.

## Claims

1. Method for interrupting the speaker during a group call by one of the listeners to said group call, said group call being set up in a mobile telephone network supporting group calls, **characterised in that** it comprises the following steps:
a) a sub-step in which the mobile station of the listener making the request switches from its active operating mode into a standby operating mode,
a sub-step of accessing a common access channel such as the access channel to the RACH network, in order to request access to the network,
a sub-step of allocating a signalling channel,
a sub-step of transmitting said interruption request through said signalling channel,
b) a step of processing said request by the network in order to decide whether or not to interrupt said speaker, and
c) a step of interrupting said speaker when said network has decided on said interruption.

2. Interruption method according to claim 1, **characterised in that** said request contains an identifier of the group call to which said listener making the request belongs.

3. Interruption method according to one of the preceding claims, **characterised in that** said request contains an identifier of the party making the request.

4. Interruption method according to one of the preceding claims, **characterised in that** it comprises a step of processing the relative priority levels of the speaker and of the listener wishing to interrupt the speaker.

5. Interruption method according to claim 4, **characterised in that** the said step of processing the relative priority levels comprises:
- a sub-step of transmitting the priority level of the present speaker to each of the listeners to the group call,
- a sub-step of comparing said transmitted priority level of the speaker with the priority level of the listener wishing to interrupt the speaker, said step being initiated by the mobile station of said listener,
the said request to interrupt the present speaker being emitted if the comparison sub-step shows that the priority level of said listener is at least higher than that of the speaker.

6. Interruption method according to claim 4, **characterised in that** said step of processing the relative priority levels comprises a sub-step of comparing said priority level of the speaker with the priority level of the listener making the request, said step being carried out by said network,
the said request being refused if the comparison sub-step shows that the priority level of said listener is at least higher than that of the speaker.

7. Interruption method according to claim 6, **characterised in that** the priority level of the listener making the request is transmitted at the same time as or within said interruption request.

8. Interruption method according to claim 6, **characterised in that** the priority level of each of the parties to a group call is known to the network.

9. Interruption method according to one of the preceding claims, **characterised in that** it comprises a step of sending a message to the mobile station of said listener making a request as to the decision taken by the network.

10. Interruption method according to claim 9, **characterised in that** said request comprises a random number which is re-transcribed in said message as to the decision taken by the network.

## Patentansprüche

1. Verfahren zum Unterbrechen des momentanen Sprechers eines Gruppenrufs durch einen der Hörer des Gruppenrufs, wobei der Gruppenruf in einem Mobiltelefonnetz aufgebaut ist, das Gruppenrufe unterstützt, **dadurch gekennzeichnet, dass** es die folgenden Schritte aufweist:
a)
- einen Teilschritt, bei dem die Mobilstation des anfordernden Hörers ihren aktiven Betriebsmodus verlässt und in den Stand-by-Betriebsmodus übergeht,
- einen Teilschritt für den Zugriff zu einem gemeinsamen Zugriffskanal wie den Zugriffskanal zum RACH-Netz, um den Netzzugriff anzufordern,
- ein Teilschritt zur Zuordnung eines Signalkanals,
- einen Teilschritt zur Übertragung der Anforderungsunterbrechung auf dem Signalkanal,
b) einen Schritt zur Verarbeitung der Anforderung durch das Netz, um die Unterbrechung des Sprechers zur Veranlassen oder nicht, und
c) einen Schritt zur Unterbrechung des Sprechers, wenn das Netz die Unterbrechung veranlasst hat.

2. Unterbrechungsverfahren nach Anspruch 1 **dadurch gekennzeichnet, dass** die Anforderung eine Kennung des Gruppenrufs enthält, zu der der anfordernde Hörer gehört.

3. Unterbrechungsverfahren nach einem der vorhergehenden Ansprüche **dadurch gekennzeichnet, dass** die Anforderung eine Kennung des anfordernden Teilnehmers enthält.

4. Unterbrechungsverfahren nach einem der vorhergehenden Ansprüche **dadurch gekennzeichnet, dass** es einen Schritt zur Verarbeitung des relativen Prioritätsniveaus des Sprechers und des Hörers umfasst, der den Sprecher zu unterbrechen wünscht.

5. Verfahren nach Anspruch 4 **dadurch gekennzeichnet, dass** der Schritt der Verarbeitung des relativen Prioritätsniveaus umfasst:
- einen Teilschritt zur Übertragung des Prioritätsniveaus des momentanen Sprechers zu jedem der Hörer des Gruppenrufs,
- einen Teilschritt zum Vergleich des Prioritätsniveaus des übertragenen Sprecherprioritätsniveaus mit dem Prioritätsniveau des Hörers, der den Sprecher zu unterbrechen wünscht, wobei der Schritt von der Mobilstation des Hörers durchgeführt wird, und
die Anforderung zur Unterbrechung des momentanen Sprechers gesendet wird, wenn der Vergleichsteilschritt zeigt, dass das Prioritätsniveau des Hörers wenigstens höher als das des Sprechers ist.

6. Unterbrechungsverfahren nach Anspruch 4 **dadurch gekennzeichnet, dass** die Verarbeitung des relativen Prioritätsniveaus einen Vergleichsteilschritt des Prioritätsniveaus des Sprechers mit dem Prioritätsniveau des anfordernden Hörers umfasst, wobei der Schritt vom Netz durchgeführt wird, und
die Anforderung zurückgewiesen wird, wenn der Vergleichsteilschritt zeigt, dass das Prioritätsniveau des Hörers wenigstens höher als das des Sprechers ist.

7. Unterbrechungsverfahren nach Anspruch 6 **dadurch gekennzeichnet, dass** das Prioritätsniveau des anfordernden Hörers zur gleichen Zeit wie die oder während der Unterbrechungsanforderung übertragen wird.

8. Unterbrechungsverfahren nach Anspruch 6 **dadurch gekennzeichnet, dass** das Prioritätsniveau jedes der Teilnehmer eines Gruppenrufs vom Netz erkannt wird.

9. Unterbrechungsverfahren nach einem der vorhergehenden Ansprüche **dadurch gekennzeichnet, dass** es einen Schritt zur Übertragung einer Nachricht betreffend die vom Netz getroffene Entscheidung zur Mobilstation des anfordernden Hörers umfasst.

10. Unterbrechungsverfahren nach Anspruch 9 **dadurch gekennzeichnet, dass** es eine Zufallszahl umfasst, die in der Nachricht betreffend die vom Netz getroffene Entscheidung rückübertragen wird.
